# EUROPEAN PATENT SPECIFICATION

(11) **EP 2 720 116 B1**
(45) Date of publication and mention of the grant of the patent: **08.04.2015**
(21) Application number: 12187865.6
(22) Date of filing: 09.10.2012
(51) Int. Cl.: H01H 13/86, G06F 3/02

(54) **Foldable keyboard**
Faltbare Tastatur
Clavier repliable

(43) Date of publication of application: 16.04.2014
(73) Proprietor: BlackBerry Limited, Waterloo, ON N2K 0A7 (CA)
(72) Inventor: Griffin, Jason Tyler, Waterloo, Ontario N2L 3W8 (CA); Reeves, James William, Twyford, Berkshire RG10 9AD (GB)
(74) Representative: Bryn-Jacobsen, Caelia

(56) References cited:
- EP-A2- 2 421 229
- GB-A- 2 128 783
- US-A- 4 610 415
- US-A- 6 053 589
- US-A1- 2004 104 897
- US-A1- 2006 138 913
- US-A1- 2012 127 258

## Description

### BACKGROUND OF THE DISCLOSURE

This disclosure is directed to a keyboard and more specifically to a foldable and portable keyboard. Conventional portable keyboards exist for use with electronic devices such as tablet computers or handheld devices, and typically are smaller in size than full-sized keyboards used in conjunction with desktop or laptop computers.

While conventional portable keyboards may provide a smaller sized device than full-sized keyboards, such smaller sized portable keyboards may prove difficult to accurately type on for users that are more familiar with full-sized keyboards. Further, such portable keyboards can become damaged during travel, which can affect the functionality of the keys. Although foldable keyboards have been developed, due to the typically staggered arrangement of keyboard keys, hinge mechanisms in such foldable keyboards are generally complicated, which can increase costs and chance of malfunction after repeated use. In addition, during use, conventional portable keyboards are generally placed on flat surfaces such that they are planar with the surface, which may decrease user comfort during typing.

US2012/127258 discloses a remote control having a housing with a top surface and bottom surface. The top surface has a first set of one or more inputs adapted to be used when the housing is held in one hand of a user. The bottom surface has a plurality of second inputs configured in a recessed portion of the bottom surface corresponding at least in part to an area adapted to be held in one hand of a user when activating the first set of inputs. The remote control also has at least one short range transmitter responsive to activation of the first and second inputs.

US6053589 discloses an automatic inclination device for a portable or notebook computer. It includes: (a) a base, on which an operation board is mounted; (b) a cover, pivotally connecting on an axis to a portion of the base; (c) a driving element, which is fixed to the cover and is coaxial with the axis, such that the driving element rotates when the cover is pivotally opened or closed; and (d) a driven element, engaged with the driving element to move therewith. The driven element is structured to move a stand to either come out from a cavity formed under the base near the pivotal portion so as to cause an associated portion of the base to rise up and the operation board to be in an inclined position, or retrieve into the cavity when the cover is opened and closed, respectively. In a preferred embodiment, the driving element is a ring gear the driven is a rack gear, and the stand is an extension of the rack gear.

The present invention is set out in the independent claim, with some optional features set out in the claim dependent thereto.

### BRIEF DESCRIPTION OF THE DRAWINGS

Figure 1 is a front perspective view of a foldable keyboard in an open configuration in accordance with the present disclosure;
Figure 2 is a front perspective view of the foldable keyboard in a closed configuration;
Figure 3 is a side view of a stand mechanism of the foldable keyboard in the closed configuration;
Figure 4 is a side view of the stand mechanism of the foldable keyboard in a first intermediate position;
Figure 5 is a side view of the stand mechanism of the foldable keyboard in a second intermediate position;
Figure 6 is a side view of the stand mechanism of the foldable keyboard in a third intermediate position;
Figure 7 is a side view of the stand mechanism of the foldable keyboard in a fourth intermediate position;
Figure 8 is a side view of the stand mechanism of the foldable keyboard in a fifth intermediate position;
Figure 9 is a side view of the stand mechanism of the foldable keyboard in the open configuration;
Figure 10 is a side partial view of portion "10" in Figure 3 showing a hinge mechanism of the foldable keyboard in the closed configuration;
Figure 11 is a side partial view of portion "11" in Figure 4 showing the hinge mechanism of the foldable keyboard in the first intermediate position;
Figure 12 is a side partial view of portion "12" in Figure 5 showing the hinge mechanism of the foldable keyboard in the second intermediate position;
Figure 13 is a side partial view of portion "13" in Figure 6 showing the hinge mechanism of the foldable keyboard in the third intermediate position;
Figure 14 is a side partial view of portion "14" in Figure 7 showing the hinge mechanism of the foldable keyboard in the fourth intermediate position;
Figure 15 is a side partial view of portion "15" in Figure 8 showing the hinge mechanism of the foldable keyboard in the fifth intermediate position;
Figure 16 is a side partial view of portion "16" in Figure 9 showing the hinge mechanism of the foldable keyboard in the open configuration; and
Figure 17 is an exploded side view of the hinge and stand mechanisms of the foldable keyboard.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

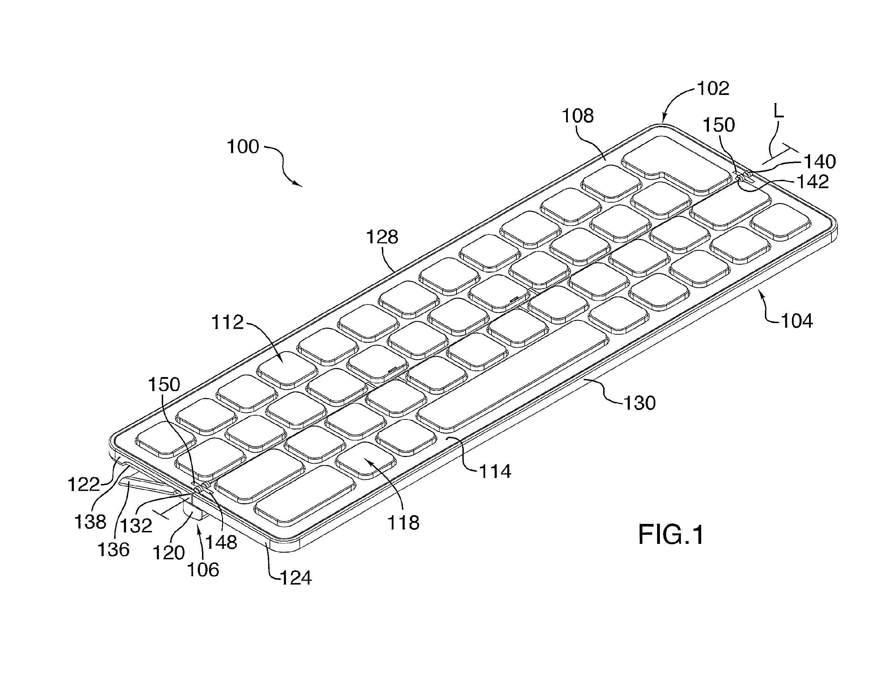

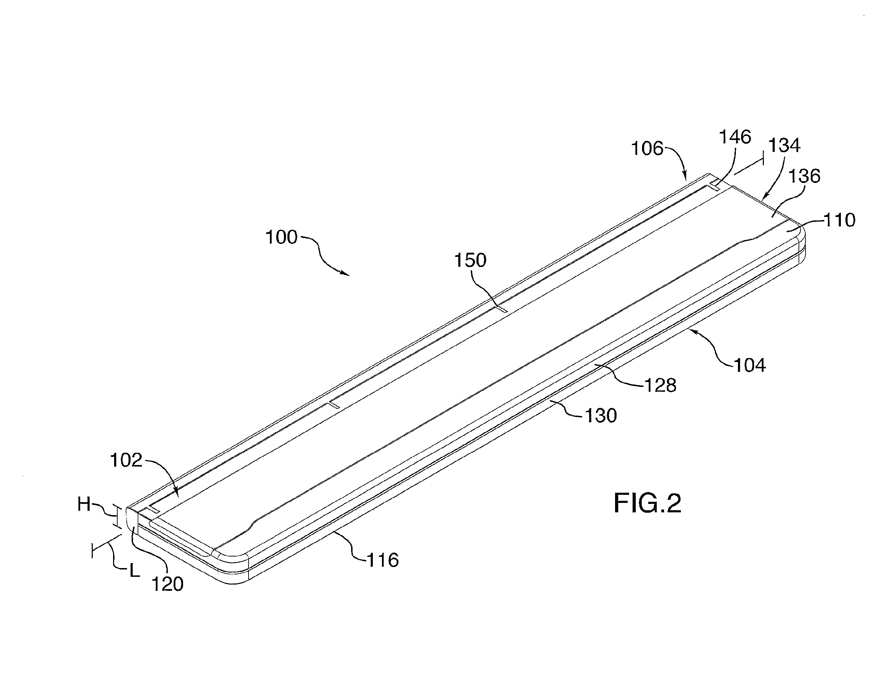

Referring to Figures 1 and 2, a foldable keyboard 100 is provided and includes an upper housing 102, a lower housing 104 and a spine member or spine 106 configured for attachment to the upper and lower housings and for enabling movement of the upper housing relative to the lower housing. The upper housing 102 includes an inner face 108 and an outer face 110 opposite the inner face, with the inner face 108 including a plurality of keys 112. Similarly, the lower housing 104 includes an inner face 114 and an outer face 116 opposite the inner face, where the inner face includes a plurality of keys 118. Although Figure 1 shows the keys 112 and 118 as physical keys, it is appreciated that the keys can also be virtual keys that appear on respective touch screens (not shown). In the case of physical keys 112, 118, the keys of one or both of the upper or lower housings 102, 104 can be recessed relative to the inner face 108 or 110 thereof, such that when the keyboard 100 is in a closed configuration, the keys 112, 118 are not in physical contact with each other. Such a recessed configuration may reduce damage to the keys 112, 118 when the keyboard 100 is in the closed configuration. However, such a configuration is not required.

When the keyboard 100 is in the open configuration (Figure 1), the upper housing inner face 108 and the lower housing inner face 114 are substantially parallel to each other and define a substantially 180° angle relative to each other. In other words, the upper housing inner face 108 and the lower housing inner face 114 are substantially planar and flush with each other when the keyboard 100 is in the open configuration. As shown in Figure 2, when the keyboard 100 is in the closed configuration, the upper housing inner face 108 and the lower housing inner face 114 remain substantially parallel to each other but are now facing towards each other.

The spine 106 is configured for pivotally connecting the upper and lower housings 102, 104 along a horizontal axis "L" defined by the upper and lower housings. In other words, the spine 106 extends along the entire length or horizontal axis "L" of the upper and lower housings, 102, 104, such that respective opposing ends 120 of the spine are substantially flush with corresponding sidewalls 122, 124 of the upper and lower housings, respectively (see Figure 2). The spine 106 is further configured to have a height "H", such that a top surface of the spine is flush with the upper housing outer face 110 and an opposing bottom surface of the spine is substantially flush with the lower housing outer face 116.

A hinge mechanism or assembly 126, which will be described in further detail below, is provided in the keyboard 100 and includes components that are configured for enabling the movement of the upper housing 102 about the horizontal axis L relative to the lower housing 104 to move the keyboard between the closed configuration (Figure 2) and an open configuration (Figure 1). Although other configurations may be suitable, in the present disclosure, a pair of identical hinge assemblies 126 are provided, each located near opposing sidewalls 122, 124 of the upper and lower housings 102, 104, respectively. Accordingly, only one of the hinge assemblies 126 will be described in detail herein.

In the present disclosure, the upper housing 102 and the lower housing 104 are approximately the same size, such that when the keyboard 100 is in the closed configuration, the sidewalls 122, 124 and outer edges 128, 130 of the upper and lower housings, respectively, are substantially flush with each other (Figure 2). Further, although other configurations may be suitable, in the present disclosure the upper housing 102 may include two rows of keys 112, and the lower housing 104 may include two rows of keys 118 - in other words, approximately % of the keys are provided on the upper housing, and the remaining ½ of the keys are provided on the lower housing. The keys 112, 118 can be arranged in vertically staggered columns, similar to the arrangement of a conventional PC or laptop keyboard, although such a configuration is not required. However, it is contemplated that such a vertically staggered column arrangement of the keys 112, 118 lends to easier and more comfortable user typing.

Also, as briefly mentioned above, by dividing the upper and lower housings 102, 104 of the keyboard 100 along the horizontal axis L of the keyboard, the keyboard can be easily folded along a break or gap 132 defined between a lowermost row of the keys 112 and an uppermost row of the keys 118. In other words, the gap 132 defined between the upper housing 102 and the lower housing 104 is located such that the keyboard 100 is divided approximately in half along the horizontal axis "L". This is in contrast to some conventional foldable keyboards, which are typically folded along a vertical axis of the keyboard, thereby preventing the keyboard from having vertically staggered rows as disclosed in the present application. If such conventional vertically foldable keyboards were to include vertically staggered columns of keys, it could be difficult to provide a straight or clean gap/break upon which the keyboard could be folded (i.e., a straight vertical axis upon which the keyboard could be folded). In addition, such a vertically folded keyboard could require a rather complex hinge mechanism to enable folding along the vertical axis, in contrast to the present hinge assembly, described in further detail herein.

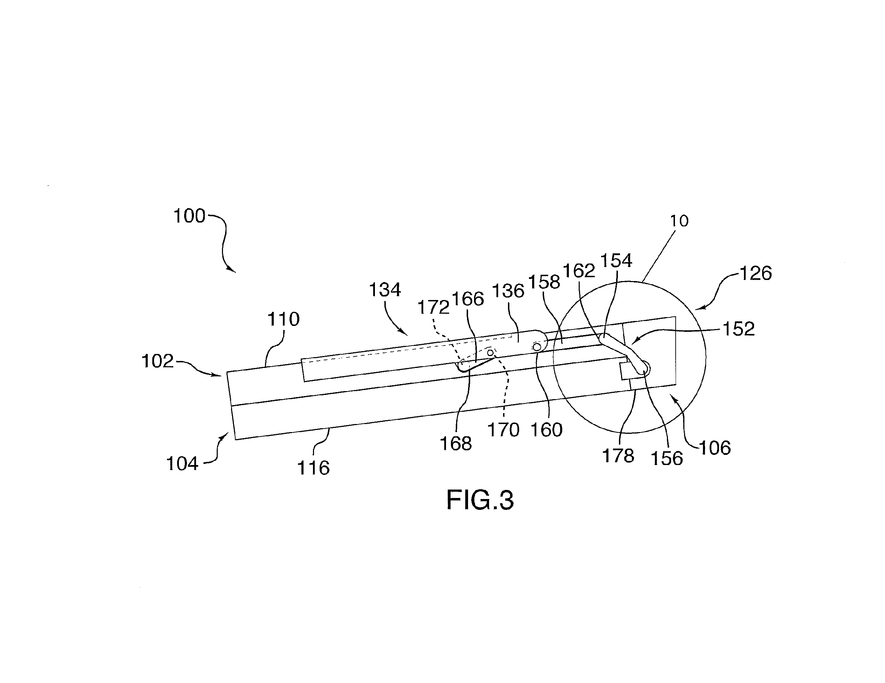

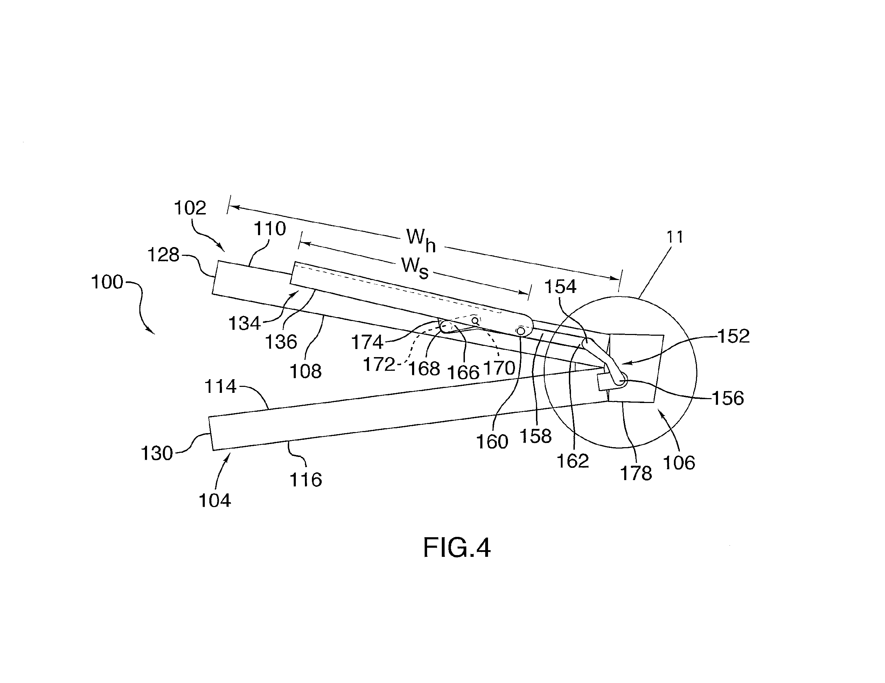

The foldable keyboard 100 further includes a stand mechanism 134, which will be described in further detail below. Broadly speaking, the stand mechanism 134 includes a stand 136 configured for translating relative to the upper housing 102 from a first position (Figure 2) to a second position (Figure 1) as the keyboard moves from the closed configuration to the open configuration. A recess 138 is defined in the upper housing outer face 110 and is configured for receiving the stand 136 when the stand mechanism is in the first position. The stand 136 and corresponding stand recess 138 have substantially the same length as the upper housing 102, and extend parallel to the horizontal axis "L" of the upper housing. In other words, opposing outer sidewalls of the stand 136 are substantially flush with corresponding sidewalls 122 of the upper housing 102. In the present disclosure, a width Wₛ of the stand 136 and corresponding recess 138 are less than a width Wₕ of the upper housing 102, as seen in Figures 3 and 4, for example. Since the stand 136 does not extend the entire width Wₕ of the upper housing 102, there is ample room for the user to grip the upper housing during movement of the stand from the first position to the second position and vice versa.

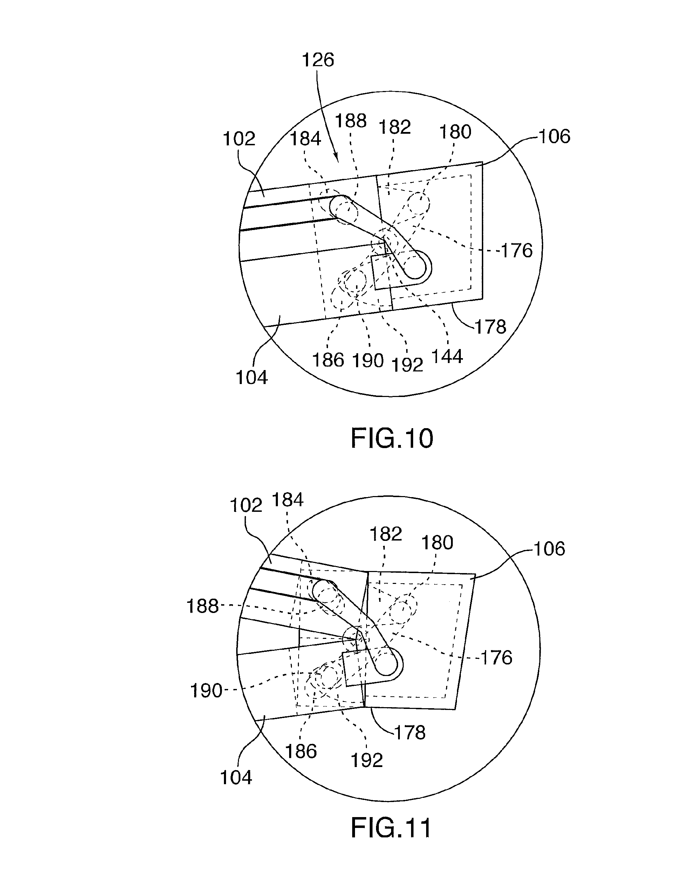

To enable movement of the keyboard 100 between the open and closed configurations, the hinge assembly 126 includes, among other things, an upper housing folding pivot 140 and a lower housing folding pivot 142 that are joined together by a folding pivot pin 144 (see Figure 10, for example). The folding pivot pin 144 aids in securing the upper housing 102 to the lower housing 104. As will be described in further detail below, as the keyboard 100 transitions to the open configuration, the folding pivots 140, 142 pivot about the folding pivot pin 144. The upper and lower housing folding pivots 140, 142 are located near the sidewalls 122, 124 of the upper and lower housings 102, 104, respectively. More specifically, the folding pivots 140, 142 are located between 5-10mm from their corresponding sidewalls 122, 124 to accommodate both the hinge assembly 126 and the stand mechanism 134. In the present disclosure, folding pivots 140, 142 and folding pivot pin 144 are provided near each sidewall 122, 124 of the keyboard 100, as shown in Figure 1.

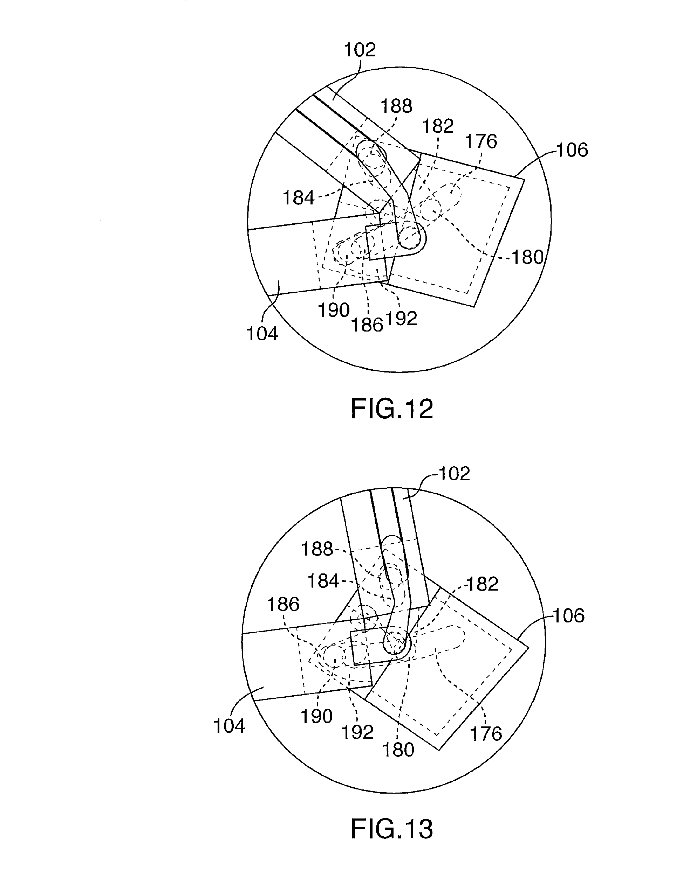

The upper and lower housings 102, 104 further define spine control plate recesses 146, 148, respectively, that are configured for receiving corresponding spine control plates 150 that protrude from the spine 106. More specifically, the upper housing 102 defines a plurality of spine control plate recesses 146 along the axis "L" that are substantially parallel to the upper housing sidewalls 122 and extend into the upper housing so as not to interfere with the upper housing keys 112. Similarly, the lower housing 104 also defines a plurality of spine control plate recesses 148 along the axis "L" that are substantially parallel to the lower housing sidewalls 124 and extend into the lower housing so as not to interfere with the lower housing keys 118. As seen in Figure 1, the spine control plate recesses 146, 148 located closest to the sidewalls 122, 124 are aligned with each other. In contrast, the remaining, internal (i.e., located away from the sidewalls of the upper and lower housings 102, 104) spine control plate recesses 146, 148 are staggered relative to each other so as not to interfere with the staggered arrangement of the keys 112, 118. The spine control plates 150 are sized and shaped to fit within each of the corresponding recesses 146, 148, and are secured within the recesses by corresponding control pins (Figures 10-16), which will be described in further detail below.

In the present disclosure, the upper and lower housings 102, 104 each define four spine control plate recesses 146, 148; however it is appreciated that more or fewer spine control plate recesses (and accordingly spine control plates 150) may be suitable. Rather than providing a single hinge assembly that extends across the entire length of the horizontal axis "L" of the keyboard 100, the disclosed spine control plates and recesses provide a less bulky hinge assembly and a smooth transition of the keyboard between the open and closed configurations. The control plate recesses 146, 148 and the spine control plates 150 are substantially rectangular in shape; in other words, they have sharp corners. It is contemplated that this configuration ensures that the gap 132 defined between the upper and lower housings 102, 104 remains as small as possible.

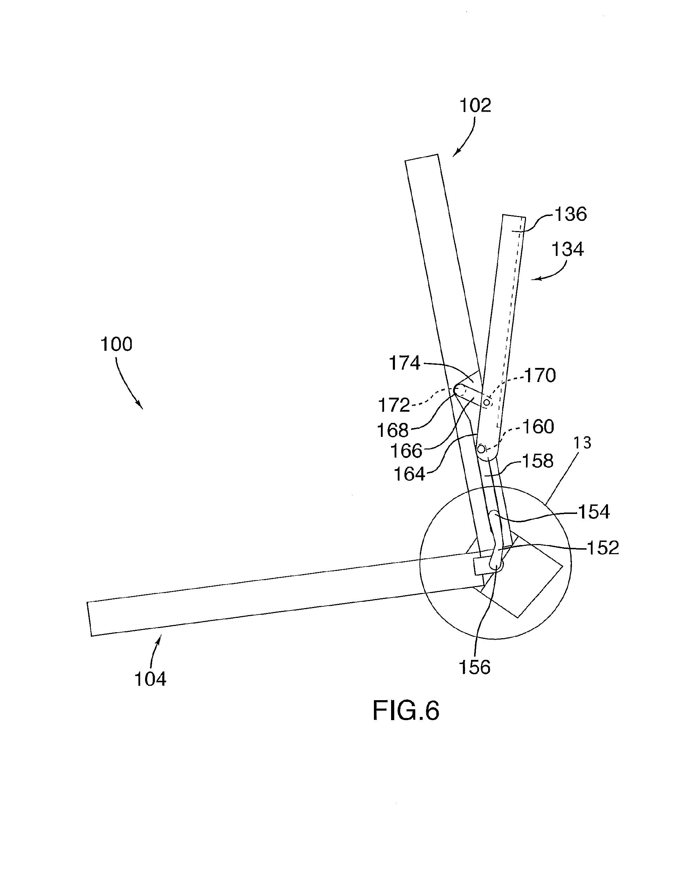

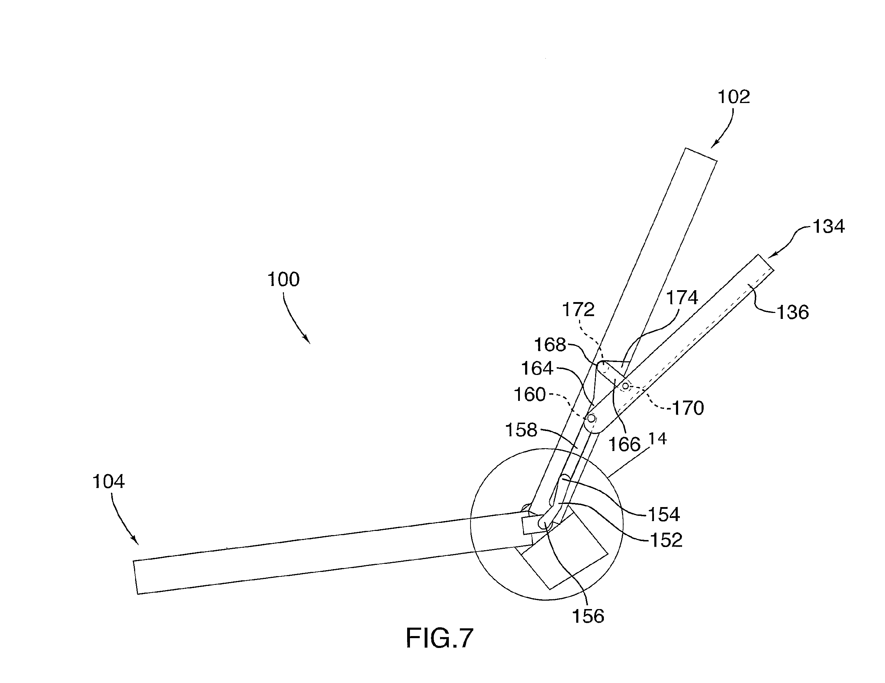

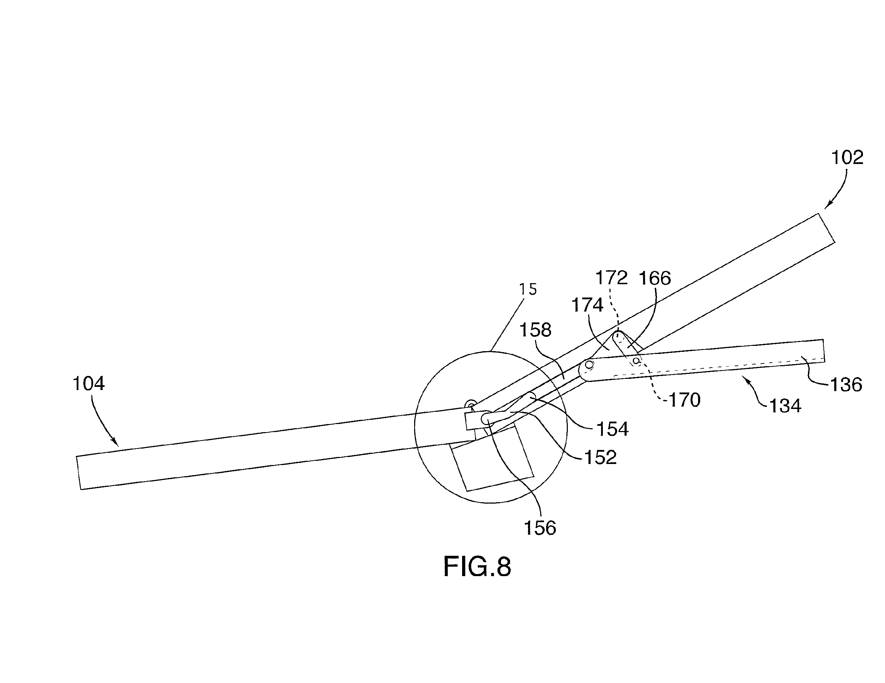

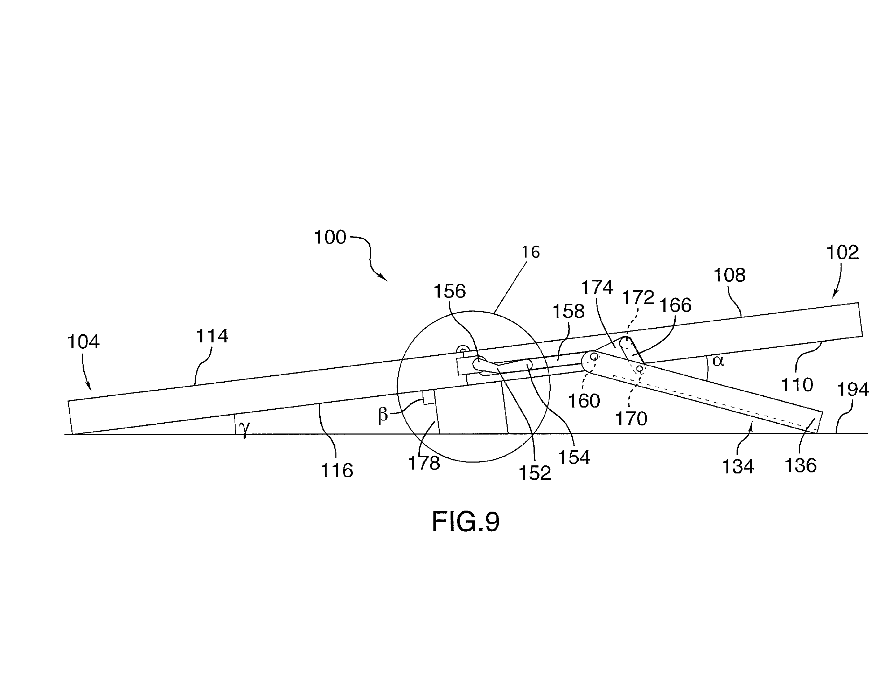

Turning next to Figures 3-9, the stand mechanism 134 of the present keyboard 100 will be described in further detail. As mentioned briefly above, when the keyboard 100 transitions from the closed to the open configuration, the stand 136 moves from the first position (Figure 2) to the second position (Figure 1). In the first position, the stand 136 is stored in the upper housing stand recess 138 such that an outer face of the stand is substantially flush and parallel with the upper housing outer face 110. In the second position, the stand 136 defines an angle α (Figure 9) with the upper housing outer face 110, which will be described in further detail below. To facilitate such movement between the first and second positions, the stand mechanism 134 further includes a drive bar 152 connected at a first end 154 thereof to the upper housing 102 and at a second end 156 thereof to the lower housing 104. The drive bar second end 156 can be secured to a leg that protrudes from the lower housing 104, as seen in Figure 3, for example.

The drive bar 152 is slightly hooked or curved in shape so as not to interfere with the hinge assembly (described below with respect to Figures 10-16) during opening and closing of the keyboard 100. More specifically, the drive bar 152 extends into the spine 106 during movement of the stand 136, and is shaped to sweep around the hinge assembly 126 without interfering with the hinge assembly and without the need for cuts/indents in the inner faces 108, 114 of the upper and lower housings 102, 104, respectively. Furthermore, the drive bar 152 is shaped and configured such that during movement of the stand mechanism 134, internal components of the spine 106 are not visible. A push rod 158 is provided in the upper housing 102 and is connected at a first end 160 thereof to the stand 136 and at a second end 162 thereof to the drive bar first end 154 by a drive bar pin (not shown).

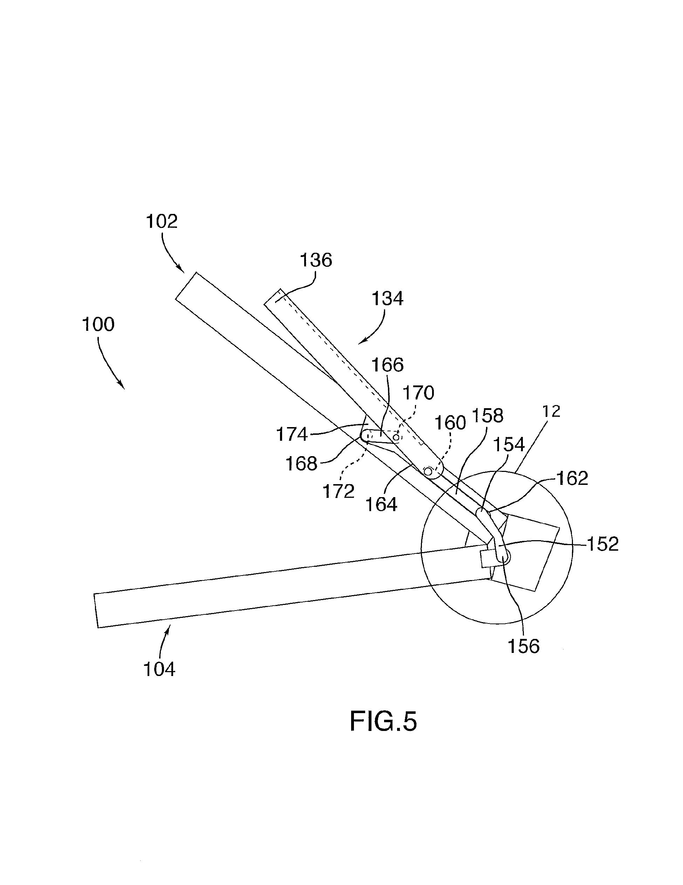

The upper housing 102 further defines a push rod slot 164 (Figures 5-9) that is configured for slidably receiving the push rod 158 and for enabling sliding movement of the push rod during transition of the stand 136 between the first and second positions. A bracing strut 166 is further provided and is connected at a first end 168 thereof to the upper housing 102 and at a second end 170 thereof to the stand 136. The bracing strut first end 168 is connected to the upper housing 102 by a bracing strut pivot pin 172 that enables rotation/pivoting of the bracing strut during opening and closing of the keyboard 100. The bracing strut 166 is shaped and sized to be received in a corresponding strut recess 174 defined in the upper housing 102 and configured for enabling smooth and controlled movement of the bracing strut during opening and closing of the keyboard 100, as described in more detail below.

During movement of the upper housing 102 relative to the lower housing 104, the stand 136 transitions from the first position to the second position. Specifically, as shown in Figure 3, the stand 136 is in the first position and is stored within the upper housing stand recess 138. Turning to Figures 4-9, as the keyboard 100 is opened, the drive bar 152 drives the push rod 158 along the push rod slot 164, thereby pivoting the bracing strut 166 and moving the stand 136 from the first position to the second position. During this movement, the drive bar 152 drives the push rod 158 such that it slides within the push rod slot 164 in a direction substantially parallel to the upper housing sidewall 122 and towards the outer edge 128 of the upper housing 102. Such driving movement of the push rod 158 translates to the stand 136, which causes the bracing strut 166 to start rotating about the bracing strut pin 172 within the strut recess 174, thereby pushing the stand away from the upper housing until it reaches the second position. When the bracing strut 166 has reached the end of its rotational travel, the keyboard 100 is in the fully open position and the stand 136 is in the second position (Figure 9), defining the angle α with the upper housing outer face 110.

Although other angles may be suitable, in the present disclosure, the angle α is between 20-25° and more specifically is approximately 22.5°. It is contemplated that such an angle α enables the stand 136 to contact a ground/desk surface such that the upper rows of keys 112 are supported when the keyboard 100 is in the open configuration, thereby preventing the keyboard from toppling or tipping during use. The length of the bracing strut 166 dictates the size of the angle α - in other words, increasing the length of the bracing strut would result in a larger angle α, whereas decreasing the length of the bracing strut would result in a smaller angle α. The bracing strut 166 also acts as a support when the stand 136 is in the second position to prevent the stand from collapsing back to the first position and to maintain the angle α defined between the stand and the upper housing outer face 110. As the bracing strut 166 is rotated beyond 90° when the stand 136 is in the second position, no latch, detent or other locking means is necessary to hold the stand in the second position.

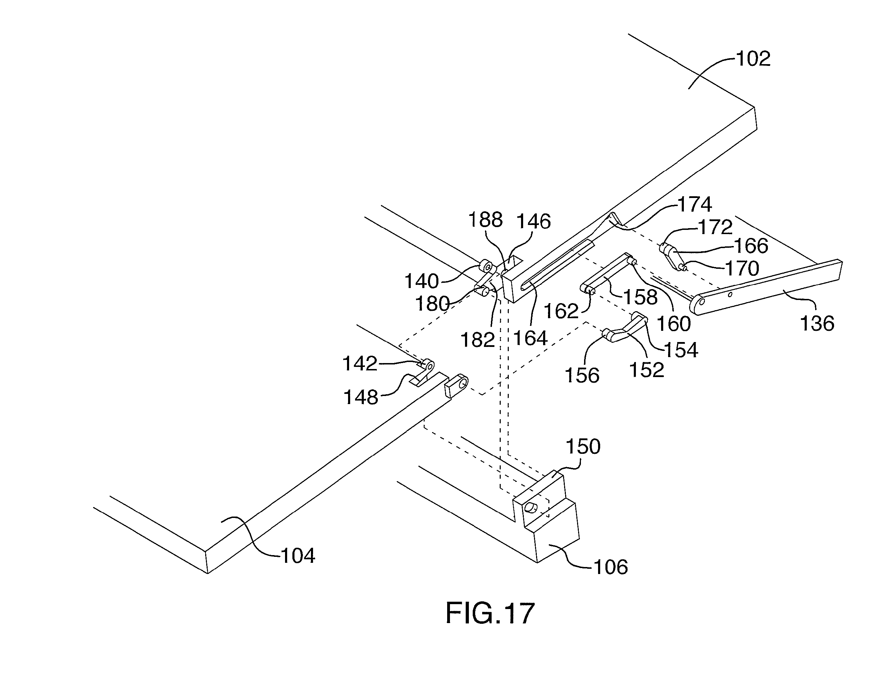

As the stand mechanism 134 is deployed as described above, the hinge assembly 126 in the spine 106 simultaneously enables the keyboard 100 to transition from the closed to the open configuration, as will now be described with respect to Figures 10-17. The hinge assembly 126 includes an arc slot 176 defined in the spine plate 150 that is configured for driving rotation of the spine 106 during opening and closing of the keyboard 100. In the present disclosure, the arc slot 176 is arranged at a substantially 45° angle relative to a bottom edge 178 of the spine 106 (Figure 10), although other orientations may be possible. It is contemplated that by arranging the arc slot 176 at the substantially 45° angle, the components of the hinge assembly 126 during opening and closing of the keyboard 100 will not interfere with the drive bar 152 and other components of the stand mechanism 134. It is also contemplated that by arranging the arc slot 176 at the substantially 45° angle, the spine 106 is thick/tall enough to include on-board power (not shown) for the keyboard 100. The arc slot 176 is configured for receiving a corresponding spine motion drive pin 180 that slides within the arc slot during opening and closing of the keyboard 100. More specifically, the upper housing 102 includes a spine motion drive bar 182, and the spine motion drive pin 180 protrudes from the bar and engages the arc slot 176.

The hinge assembly further includes a first symmetry control slot 184 in an upper portion of the spine plate 150 and a second symmetry control slot 186 in a lower portion of the spine plate. In the present disclosure, the first and second symmetry control slots 184, 186 are located on opposing sides of the spine plate 150. The upper housing 102 includes a first symmetry control pin 188 that is configured for engaging the first symmetry control slot 184 and for sliding within the control slot during opening and closing of the keyboard 100. Similarly, the lower housing 104 includes a second symmetry control pin 190 configured for engaging the second symmetry control slot 186 and for sliding within the control slot during opening and closing of the keyboard 100.

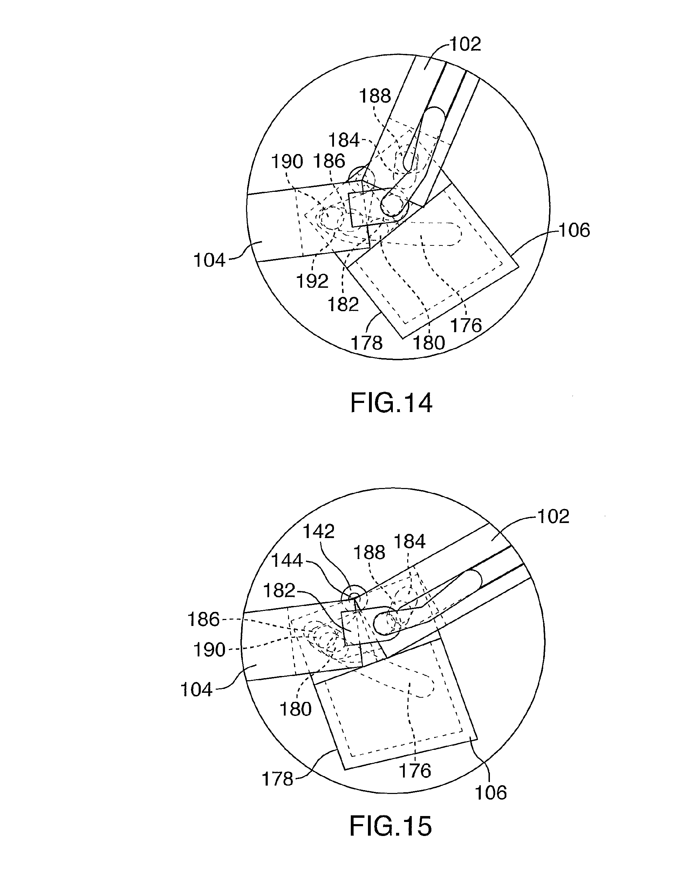

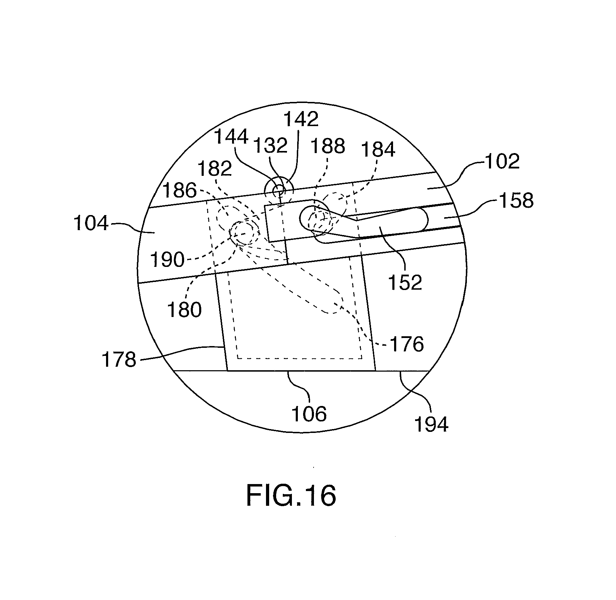

As the keyboard 100 is transitioned from the closed configuration (Figure 10) to the open configuration (Figure 16), the drive pin 180 moves within the arc slot 176, which drives the first and second symmetry control pins 188, 190 to move within their respective slots 184, 186, as seen in Figures 11-15. Once in the open configuration (Figure 16), the drive pin bar 182 is received within a drive bar recess 192 (best seen in Figure 14) defined in the lower housing spine plate recess 148, and the drive pin 180 is located near the bottom edge 178 of the spine 106 in the arc slot 176. During opening and closing of the keyboard 100, the hinge assembly 126 is hidden from view due to the arrangement of the spine control plates 150 in their respective spine control recesses 146, 148.

In the open configuration (Figures 1 and 16), the gap 132 defined between the upper and lower housings 102, 104, is minimized due to the construction of the hinge assembly 126 and the upper and lower housings. Specifically, the upper and lower housings 102, 104 each have a substantially rectangular shape with sharp corners that could interfere with the spine 106 during movement. However, due to the configuration of the arc slot 176 and first and second symmetry control slots 184, 186, the transition between the open and closed configurations is smooth and there is no contact or interference between the spine 106 and the upper and lower housings 102, 104. In addition, due to the staggered arrangement of the spine plates 150, the staggered vertical/columnar arrangement of the keys 112, 118 of the keyboard 100 is not disrupted. Furthermore, the configuration of the spine plates 150 and corresponding spine plate recesses 146, 148 along the horizontal axis "L" of the keyboard 100 allows for a substantially slimmer keyboard in comparison to conventional portable keyboards, which typically include mechanical elements only at the outer extremities of the keyboard, thereby requiring thicker keyboards to resist flexion and/or twisting during opening and closing of the keyboard.

When the keyboard 100 is in the open configuration, the bottom edge 178 of the spine 106 defines an angle β with the outer face 116 of the lower housing 104. In addition, the outer face 116 of the lower housing 104 defines an angle γ with a surface 194 on which the keyboard 100 is resting (Figure 9). In the present disclosure, the angle β can be approximately 90°. To provide an ergonomic typing surface, the angle γ can be between 5-20° and in the present disclosure is approximately 7.5°, similar to the angle defined by conventional desktop keyboards, for example.

The present foldable keyboard provides a slim and simple mechanism that folds along the horizontal axis of the keyboard, thereby allowing for an even split amongst the rows of keys and for a simple hinge assembly. This is in contrast to conventional foldable keyboards which typically fold along a vertical axis of the keyboard and require a more complicated hinge assembly due to the staggered nature of the keys. The present foldable keyboard provides a layout of keys that is similar to a full-sized staggered keyboard, and as a result the typical pitch and spacing between keys is not disrupted. During opening and closing of the keyboard, a stand is pushed out from the upper housing of the keyboard to support the opened keyboard at an angle relative to a flat or stable surface. The present foldable keyboard stand automatically unfolds or transitions during opening and closing of the keyboard. When the foldable keyboard is in the closed configuration, the keys are protected and in some instances can sink relative to their respective housings to prevent direct contact between the keys in the closed configuration.

While a particular embodiment of the present foldable keyboard has been described herein, it will be appreciated by those skilled in the art that changes and modifications may be made thereto without departing from the disclosure in its broadest aspects

## Claims

1. A foldable keyboard comprising:
an upper housing (102) having a recess (138) formed therein having an outer face (110), and having at least two rows of keys;
a lower housing (104) having at least two rows of keys;
a spine member (106) configured for pivotally connecting the upper and lower housings along a horizontal axis defined by the upper and lower housings;
a hinge mechanism (126) provided in the spine member and configured for enabling movement of the upper housing relative to the lower housing to move the keyboard between a closed configuration and an open configuration; and
a stand mechanism (134) that includes a stand (136) pivotally connected to the upper housing and received within the recess in the upper housing when the keyboard is in the closed configuration, the stand configured to be pivoted relative to the upper housing from a first position to a second position as the keyboard moves from the closed configuration to the open configuration such that when the keyboard is in the open configuration the stand defines an angle with the upper housing outer face which enables it to contact a surface such that the at least two rows of keys of the upper housing are supported, thereby preventing the keyboard from toppling or tipping during use.

2. The foldable keyboard of claim 1, wherein in the closed configuration, a top surface of the spine is flush with an outer face of the upper housing.

3. The foldable keyboard of claim 1, wherein in the closed configuration, a bottom surface of the spine is flush with an outer face of the lower housing.

4. The foldable keyboard of claim 1, wherein the hinge mechanism includes:
a slot defined in the spine;
a pivot bar having a pivot pin at a first end thereof, the pivot pin configured for being received in the slot;
an upper housing slot defined in the spine and configured for receiving a corresponding upper housing pin; and
a lower housing slot defined in the spine and configured for receiving a corresponding lower housing pin.

5. The foldable keyboard of claim 4, wherein the pivot bar includes a second end that is attached to the upper housing, and wherein during movement of the upper housing relative to the lower housing, the pivot pin slides within the slot.

6. The foldable keyboard of claim 1 further including:
at least one spine plate recess in the upper housing;
at least one spine plate recess in the lower housing; and
at least two spine plates extending from the spine;
wherein each spine plate recess is configured for receiving a corresponding spine plate, the spine plate recess and corresponding spine plate being pivotally connected by a corresponding pin.

7. The foldable keyboard of claim 1, wherein the stand mechanism further includes:
a drive bar connected at a first end to the upper housing and at a second end to the lower housing;
a push rod connected at a first end to the stand and at a second end to the upper housing;
a push rod slot defined in the upper housing and configured for slidably receiving the push rod; and
a bracing strut connected at a first end to the upper housing and at a second end to the stand;
wherein during movement of the upper housing relative to the lower housing, the drive bar adapted to drive the push rod along the push rod slot, thereby pivoting the bracing strut and moving the stand from the first position to the second position.

8. The foldable keyboard of claim 7, wherein the upper housing further defines a strut recess configured for receiving the bracing strut and allowing pivotable movement thereof during movement of the stand between the first and second positions.

9. The foldable keyboard of claim 7, wherein the stand mechanism further includes a leg having a first end connected to the lower housing and a second end connected to the second end of the drive bar.

10. The foldable keyboard of claim 1, wherein in the closed configuration, the keys on the lower housing are recessed relative to an inner face of the upper housing.

## Patentansprüche

1. Eine faltbare Tastatur, umfassend:
ein oberes Gehäuse (102) mit einer darin geformten Vertiefung (138) mit einer äußeren Front (110), und mit zumindest zwei Reihen von Tasten;
ein unteres Gehäuse (104) mit zumindest zwei Reihen von Tasten;
ein Rückenteil (106), das konfiguriert ist zum schwenkbaren Verbinden des oberen und unteren Gehäuses entlang einer horizontalen Achse, die durch das obere und untere Gehäuse definiert ist;
einen Schwenkmechanismus (126), der in dem Rückenteil bereitgestellt ist und konfiguriert ist zum Ermöglichen von Bewegung des oberen Gehäuses relativ zu dem unteren Gehäuse, um die Tastatur zwischen einer geschlossenen Konfiguration und einer geöffneten Konfiguration zu bewegen; und
einen Standmechanismus (134), der einen Stand (136) aufweist, der schwenkbar mit dem oberen Gehäuse verbunden ist und innerhalb der Vertiefung in dem oberen Gehäuse aufgenommen ist, wenn die Tastatur in der geschlossenen Konfiguration ist, wobei der Stand konfiguriert ist, um geschwenkt zu werden relativ zu dem oberen Gehäuse von einer ersten Position zu einer zweiten Position, wenn die Tastatur sich von der geschlossenen Konfiguration zu der geöffneten Konfiguration bewegt, so dass wenn die Tastatur in der geöffneten Konfiguration ist, der Stand einen Winkel mit der äußeren Front des oberen Gehäuses definiert, welcher es ihm ermöglicht, eine Fläche so zu kontaktieren, dass die zumindest zwei Reihen von Tasten des oberen Gehäuses unterstützt werden, wodurch verhindert wird, dass die Tastatur während einer Benutzung umfällt oder umkippt.

2. Die faltbare Tastatur nach Anspruch 1, wobei in der geschlossenen Konfiguration eine obere Fläche des Rückens bündig mit einer äußeren Front des oberen Gehäuses ist.

3. Die faltbare Tastatur nach Anspruch 1, wobei in der geschlossenen Konfiguration eine Bodenfläche des Rückens bündig mit einer äußeren Front des unteren Gehäuses ist.

4. Die faltbare Tastatur nach Anspruch 1, wobei der Drehmechanismus aufweist:
einen Schlitz, der in dem Rücken definiert ist;
eine Drehstange mit einem Drehstift an deren einem ersten Ende, wobei der Drehstift konfiguriert ist, um in dem Schlitz aufgenommen zu werden;
ein oberer Gehäuseschlitz, der in dem Rücken definiert ist und konfiguriert ist, um einen korrespondierenden oberen Gehäusestift aufzunehmen; und
ein unterer Gehäuseschlitz, der in dem Rücken definiert ist und konfiguriert ist, um einen korrespondierenden unteren Gehäusestift aufzunehmen.

5. Die faltbare Tastatur nach Anspruch 4, wobei die Drehstange ein zweites Ende aufweist, das an das obere Gehäuse angebracht ist, und wobei während einer Bewegung des oberen Gehäuses relativ zu dem unteren Gehäuse der Drehstift innerhalb des Schlitzes rutscht.

6. Die faltbare Tastatur nach Anspruch 1, ferner aufweisend:
zumindest eine Rückenplattenvertiefung in dem oberen Gehäuse;
zumindest eine Rückenplattenvertiefung in dem unteren Gehäuse; und
zumindest zwei Rückenplatten, die sich von dem Rücken ausdehnen;
wobei jede Rückenplattenvertiefung konfiguriert ist, um eine korrespondierende Rückenplatte zu erhalten, wobei die Rückenplattenvertiefung und die korrespondierende Rückenplatte schwenkbar durch einen korrespondierenden Stift verbunden sind.

7. Die faltbare Tastatur nach Anspruch 1, wobei der Standmechanismus ferner aufweist:
eine Antriebsstange, die an einem ersten Ende mit dem oberen Gehäuse und an einem zweiten Ende mit dem unteren Gehäuse verbunden ist;
eine Druckstange, die an einem ersten Ende mit dem Stand und an einem zweiten Ende mit dem oberen Gehäuse verbunden ist;
ein Druckstangeschlitz, der in dem oberen Gehäuse definiert ist und konfiguriert ist, um rutschbar die Druckstange aufzunehmen; und
eine Verstärkungsstütze, die an einem ersten Ende mit dem oberen Gehäuse und an einem zweiten Ende mit dem Stand verbunden ist;
wobei während einer Bewegung des oberen Gehäuses relativ zu dem unteren Gehäuse die Antriebsstange angepasst ist, um die Druckstange entlang des Druckstangenschlitzes zu betätigen, wodurch die Verstärkungsstütze geschwenkt wird und der Stand aus der ersten Position in die zweite Position bewegt wird.

8. Die faltbare Tastatur nach Anspruch 7, wobei das obere Gehäuse ferner eine Stützvertiefung definiert, die konfiguriert ist, um die Verstärkungsstütze zu erhalten und eine schwenkbare Bewegung derer während einer Bewegung des Stands zwischen der ersten und zweiten Position zu erlauben.

9. Die faltbare Tastatur nach Anspruch 7, wobei der Standmechanismus ferner einen Abschnitt aufweist, der mit einem ersten Ende mit dem unteren Gehäuse und einem zweiten Ende mit dem zweiten Ende der Antriebsstange verbunden ist.

10. Die faltbare Tastatur nach Anspruch 1, wobei in der geschlossenen Konfiguration die Tasten auf dem unteren Gehäuse relativ zu einer inneren Front des oberen Gehäuses vertieft sind.

## Revendications

1. Clavier pliable, comprenant :
un boîtier supérieur (102) comportant un évidement (138) formé en son sein, comportant une face externe (110), et comportant au moins deux rangées de touches ;
un boîtier inférieur (104) comportant au moins deux rangées de touches ;
un élément dos (106) configuré pour relier en pivotement les boîtiers supérieur et inférieur le long d'un axe horizontal défini par les boîtiers supérieur et inférieur ;
un mécanisme d'articulation (126) situé dans l'élément dos et configuré pour permettre un mouvement du boîtier supérieur relativement au boîtier inférieur afin de déplacer le clavier entre une configuration fermée et une configuration ouverte ; et
un mécanisme de support (134) qui comprend un support (136) relié en pivotement au boîtier supérieur et reçu au sein de l'évidement dans le boîtier supérieur lorsque le clavier est dans la configuration fermée, le support étant configuré pour être amené à pivoter relativement au boîtier supérieur d'une première position à une seconde position tandis que le clavier se déplace de la configuration fermée à la configuration ouverte de manière que, lorsque le clavier est dans la configuration ouverte, le socle définisse un angle avec la face externe de boîtier supérieur qui lui permette de venir au contact d'une surface de manière que les au moins deux rangées de touches du boîtier supérieur soient supportées, ce qui empêche le clavier de basculer ou de s'incliner à l'utilisation.

2. Clavier pliable selon la revendication 1, dans lequel, dans la configuration fermée, une surface supérieure du dos est de niveau avec une face externe du boîtier supérieur.

3. Clavier pliable selon la revendication 1, dans lequel, dans la configuration fermée, une surface inférieure du dos est de niveau avec une face externe du boîtier inférieur.

4. Clavier pliable selon la revendication 1, dans lequel le mécanisme d'articulation comprend :
une fente définie dans le dos ;
une barre pivotante comportant un pivot à sa première extrémité, le pivot configuré pour être reçu dans la fente ;
une fente de boîtier supérieur définie dans le dos et configurée pour recevoir une tige de boîtier supérieur ; et
une fente de boîtier inférieur définie dans le dos et configurée pour recevoir une tige de boîtier inférieur correspondante.

5. Clavier pliable selon la revendication 4, dans lequel la barre pivotante comprend une seconde extrémité qui est fixée au boîtier supérieur, et dans lequel, au cours du mouvement du boîtier supérieur relativement au boîtier inférieur, le pivot glisse au sein de la fente.

6. Clavier pliable selon la revendication 1, comprenant, en outre :
au moins un évidement de plaque dos dans le boîtier supérieur ;
au moins un évidement de plaque dos dans le boîtier inférieur ; et
au moins deux plaques dos s'étendant depuis le dos ;
chaque évidement de plaque dos étant configuré pour recevoir une plaque dos correspondante, l'évidement de plaque dos et la plaque dos correspondante étant reliés en pivotement par une tige correspondante.

7. Clavier pliable selon la revendication 1, dans lequel le mécanisme de support comprend, en outre :
une barre d'entraînement reliée, à une première extrémité, au boîtier supérieur et, à une seconde extrémité, au boîtier inférieur ;
une tige poussoir reliée, à une première extrémité, au support et, à une seconde extrémité, au boîtier supérieur ;
une fente de tige poussoir définie dans le boîtier supérieur et configurée pour recevoir, en glissement, la tige poussoir ; et
une entretoise reliée, à une première extrémité, au boîtier supérieur et, à une seconde extrémité, au support ;
dans lequel, au cours du mouvement du boîtier supérieur relativement au boîtier inférieur, la barre d'entraînement est apte à entraîner la tige poussoir le long de la fente de tige poussoir, ce qui fait pivoter l'entretoise et déplace le support de la première position à la seconde position.

8. Clavier pliable selon la revendication 7, dans lequel le boîtier supérieur définit, en outre, un évidement d'entretoise configuré pour recevoir l'entretoise et permettre son pivotement au cours du déplacement du socle entre les première et seconde positions.

9. Clavier pliable selon la revendication 7, dans lequel le mécanisme de support comprend, en outre, un jambage comportant une première extrémité reliée au boîtier inférieur et une seconde extrémité reliée à la seconde extrémité de la barre d'entraînement.

10. Clavier pliable selon la revendication 1, dans lequel, dans la configuration fermée, les touches sur le boîtier inférieur sont évidées relativement à une face interne du boîtier supérieur.
